# EUROPEAN PATENT SPECIFICATION

(11) **EP 2 404 924 B1**
(45) Date of publication and mention of the grant of the patent: **20.03.2013**
(21) Application number: 11172911.7
(22) Date of filing: 06.07.2011
(51) Int. Cl.: C07F 7/08, C08G 77/26

(54) **Aqueous solution of piperazinyl-containing silanol compound and making method**
Wässrige Lösung einer Piperazinyl-haltigen Silanolverbindung und Herstellungsverfahren
Solution aqueuse de composé de silanol contenant du pipérazinyl et procédé de fabrication

(30) Priority: 08.07.2010 JP 2010155590
(43) Date of publication of application: 11.01.2012
(73) Proprietor: Shin-Etsu Chemical Co., Ltd., Tokyo 100-0004 (JP)
(72) Inventor: Honma, Takayuki, Joetsu-shi, Niigata (JP); Kubota, Tohru, Joetsu-shi, Niigata (JP); Kiyomori, Ayumu, Joetsu-shi, Niigata (JP)
(74) Representative: TER MEER - STEINMEISTER & PARTNER GbR

(56) References cited:
- EP-A1- 2 180 001
- JP-A- 2008 111 023

## Description

### TECHNICAL FIELD

This invention relates to an aqueous solution of a piperazinyl-containing silanol compound which is useful as silane coupling agents, surface treating agents, textile treating agents, adhesives, paint additives, polymer modifiers or the like, and a method for preparing the aqueous solution.

### BACKGROUND ART

It is well known in the art that amino-containing organosilicon compounds are useful as silane coupling agents, surface treating agents, textile treating agents, adhesives, paint additives or the like. In a particular application where an inorganic material (e.g., glass fiber, metal or oxide filler) is added to a polymeric material for the purpose of improving the mechanical properties and heat resistance thereof, the concurrent addition of the amino-containing organosilicon compound is known to improve the adhesion between the polymeric and inorganic materials and the dispersed state of the inorganic material. The desired addition effects are enhanced.

EP 2 180 001 shows piperazinyl-containing silane useful as silane coupling agents.

It is also known that when silane coupling agents including amino-containing organosilicon compounds are used, they release substantial amounts of alcohol in the mixing process. While the current concern is highlighted on the environmental problems closely correlated to the global green house effect and health hazards, one important task is a saving of volatile organic compounds. One attempt to reduce the release of alcohol from the silane coupling agent is involved in the development efforts toward a saving of volatile organic compounds. The inventors disclosed in JP-A 2008-111023 an aqueous solution of a propylsilanol compound having a tertiary amino group at γ-position which enables a saving of volatile organic compound while enhancing the addition effects.

The propylsilanol compound having a tertiary amino group at γ-position, however, is sometimes less effective in improving the adhesion between two or more different materials, despite the possession of amino group.

### Citation List

Patent Document 1: JP-A 2008-111023

### SUMMARY OF INVENTION

An object of the invention is to provide an aqueous solution of a piperazinyl-containing silanol compound or a compound having an amino group and a functional group at a non-silicon site, which is effective in improving the adhesion between different materials, and a method for preparing the same.

The inventors have found that an aqueous solution comprising a piperazinyl-containing silanol compound having the general formula (1): 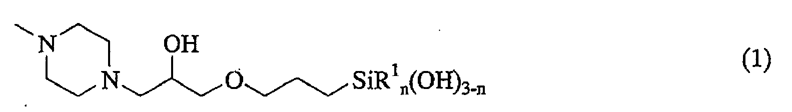 wherein R¹ is a substituted or unsubstituted monovalent hydrocarbon group of 1 to 10 carbon atoms and n is an integer of 0 to 2 and a dehydrated condensate thereof is effective in improving the adhesion between two or more different materials while minimizing release of volatile organic compound.

In one aspect, the invention provides an aqueous solution comprising a piperazinyl-containing silanol compound having the general formula (1) and a dehydrated condensate thereof, the aqueous solution containing less than or equal to 5% by weight of a volatile alcohol.

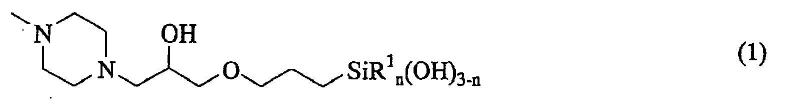

Herein R¹ is a substituted or unsubstituted monovalent hydrocarbon group of 1 to 10 carbon atoms and n is an integer of 0 to 2.

In a preferred embodiment, 3 to 20,000 moles of water is present per mole of silicon atoms.

In another aspect, the invention provides a method for preparing an aqueous solution of a piperazinyl-containing silanol compound, comprising the steps of adding a compound having the general formula (2) to water, and removing a volatile alcohol formed as byproduct.

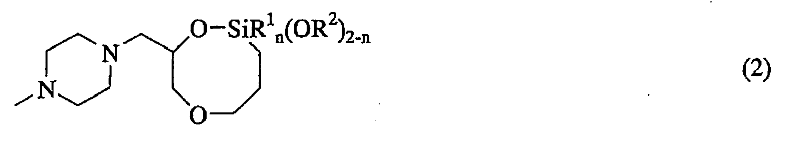

Herein R¹ and R² are each independently a substituted or unsubstituted monovalent hydrocarbon group of 1 to 10 carbon atoms and n is an integer of 0 to 2.

### ADVANTAGEOUS EFFECTS OF INVENTION

An aqueous solution comprising a piperazinyl-containing silanol compound and a dehydrated condensate thereof is used to improve the adhesion between two or more different materials and to impart high mechanical properties and heat resistance to the composite material thereof. No alcohol is released from the aqueous solution. Since the content of volatile alcohol is minimized, any alcohol which will volatilize during use may be controlled.

### BRIEF DESCRIPTION OF DRAWINGS

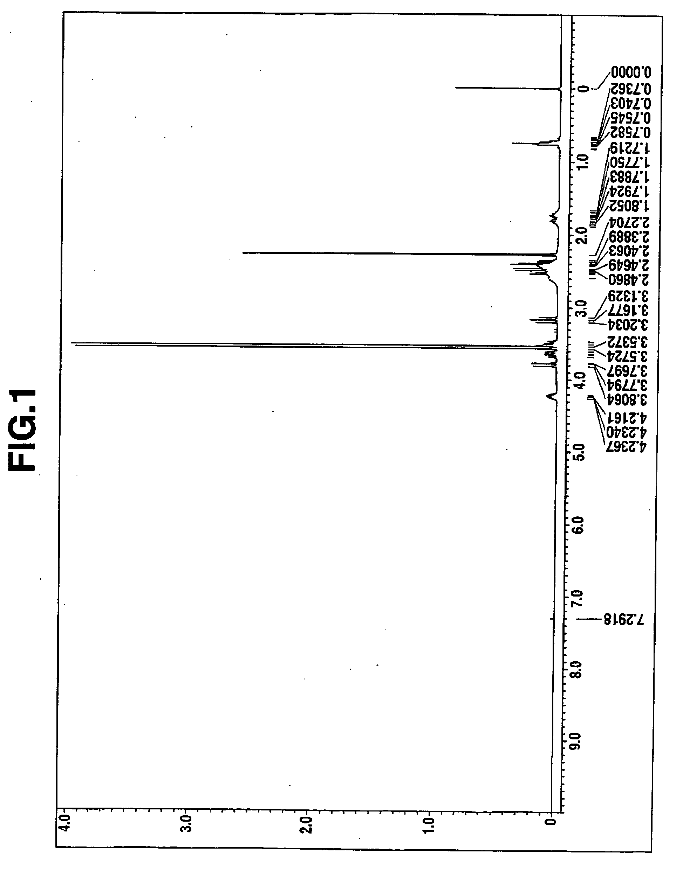

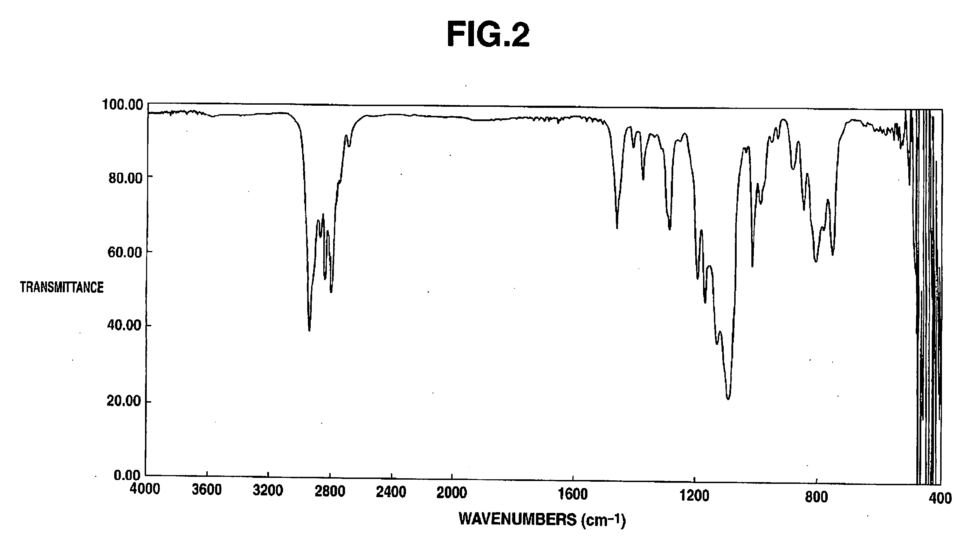

FIGS. 1 and 2 are ¹H-NMR and IR spectra of the compound of Synthesis Example 1, respectively.
FIGS. 3 and 4 are ¹H-NMR and IR spectra of the compound of Synthesis Example 2, respectively.
FIGS. 5 and 6 are ¹H-NMR and IR spectra of the compound of Synthesis Example 3, respectively.

### DESCRIPTION OF EMBODIMENTS

According to the invention, an aqueous solution is defined as comprising a piperazinyl-containing silanol compound having the general formula (1): 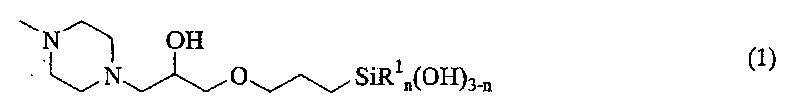 wherein R¹ is a substituted or unsubstituted monovalent hydrocarbon group of 1 to 10 carbon atoms and n is an integer of 0 to 2 and a dehydrated condensate thereof. The content of a volatile alcohol such as methanol or ethanol is less than or equal to 5% by weight of the aqueous solution.

In formula (1), R¹ is a monovalent hydrocarbon group of 1 to 10 carbon atoms, preferably 1 to 6 carbon atoms, for example, straight, branched or cyclic alkyl, alkenyl or aryl. Exemplary hydrocarbon groups include methyl, ethyl, propyl, isopropyl, butyl, isobutyl, tert-butyl, pentyl, cyclopentyl, hexyl, cyclohexyl, heptyl, octyl, decyl, vinyl, allyl, methallyl, and butenyl. Suitable substituents thereon include halogen atoms such as fluorine.

Suitable examples of the compound having formula (1) include 1-trihydroxysilyl-6-hydroxy-7-(4-methylpiperazinyl)-4-oxaheptane, 1-methyldihydroxysilyl-6-hydroxy-7-(4-methylpiperazinyl)-4-oxaheptane, 1-dimethylhydroxysilyl-6-hydroxy-7-(4-methylpiperazinyl)-4-oxaheptane, 1-ethyldihydroxysilyl-6-hydroxy-7-(4-methylpiperazinyl)-4-oxaheptane, 1-diethylhydroxysilyl-6-hydroxy-7-(4-methylpiperazinyl)-4-oxaheptane, 1-propyldihydroxysilyl-6-hydroxy-7-(4-methylpiperazinyl)-4-oxaheptane, 1-dipropylhydroxysilyl-6-hydroxy-7-(4-methylpiperazinyl)-4-oxaheptane, 1-isopropyldihydroxysilyl-6-hydroxy-7-(4-methylpiperazinyl)-4-oxaheptane, and 1-diisopropylhydroxy-silyl-6-hydroxy-7-(4-methylpiperazinyl)-4-oxaheptane.

Examples of the dehydrated condensate of a silanol compound having formula (1) include oligomers like dimer, trimer, and tetramer in which dehydration condensation occurs between molecules of formula (1), specifically between silanol groups and/or between silanol and carbon-bonded hydroxyl groups. The compound of formula (1) and the oligomer are generally present in a weight ratio between 99:1 and 1:99, specifically between 99:1 and 10:90.

The aqueous solution of a piperazinyl-containing silanol compound is obtained by adding a compound having the general formula (2): 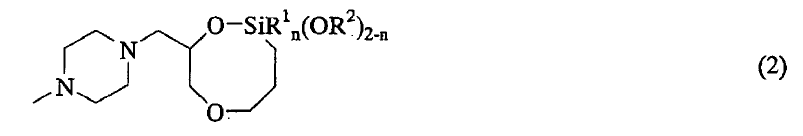 wherein R¹ and R² are each independently a substituted or unsubstituted monovalent hydrocarbon group of 1 to 10 carbon atoms and n is an integer of 0 to 2 to water, and removing a volatile alcohol formed as byproduct.

In formula (2), R¹ is as defined above. R² is a monovalent hydrocarbon group of 1 to 10 carbon atoms, preferably 1 to 4 carbon atoms, for example, straight, branched or cyclic alkyl, alkenyl or aryl. Exemplary hydrocarbon groups include methyl, ethyl, propyl, isopropyl, butyl, isobutyl, tert-butyl, pentyl, cyclopentyl, hexyl, cyclohexyl, heptyl, octyl, decyl, vinyl, allyl, methallyl, and butenyl. Suitable substituents thereon include halogen atoms such as fluorine.

Suitable examples of the compound having formula (2) include 2,2-dimethoxy-8-(4-methylpiperazinyl)methyl-1,6-dioxa-2-silacyclooctane, 2,2-diethoxy-8-(4-methylpiperazinyl)methyl-1,6-dioxa-2-silacyclooctane, 2-methoxy-2-methyl-8-(4-methylpiperazinyl)methyl-1,6-dioxa-2-silacyclooctane, 2-ethoxy-2-methyl-8-(4-methylpiperazinyl)-methyl-1,6-dioxa-2-silacyclooctane, 2,2-dimethyl-8-(4-methylpiperazinyl)methyl-1,6-dioxa-2-silacyclooctane, 2-methoxy-2"ethyl-8-(4-methylpiperazinyl)methyl-l,6-dioxa-2-silacyclooctane, 2-ethoxy-2-ethyl-B-(4-methylpiperazinyl)-methyl-l,6-dioxa-2-silacyclooctane, 2,2-diethyl-8-(4-methylpiperazinyl)methyl-1,6-dioxa-2-silacyclooctane, 2-methoxy-2-propyl-8-(4-methylpiperazinyl)methyl-1,6-dioxa-2-silacyclooctane, 2-ethoxy-2-propyl-8-(4-methylpiperazinyl)-methyl-1,6-dioxa-2-silacyclooctane, 2,2-dipropyl-8-(4-methylpiperazinyl)methyl-1,6-dioxa-2-silacyclooctane, 2-methoxy-2-isopropyl-8-(4-methylpiperazinyl)methyl-1,6-dioxa-2-silacyclooctane, 2-ethoxy-2-isopropyl-8-(4-methylpiperazinyl)methyl-Z,6-dzoxa-2-silaoyclooctane, and 2,2-diisopropyl-8-(4-methylpiperazinyl)methyl-1,6-dioxa-2-silacyclooctane.

No particular limits are imposed on the conditions under which the compound of formula (2) is added to water. Preferred conditions include atmospheric pressure or a subatmospheric pressure of approximately 1 kPa and a temperature of 0 to 100°C, preferably 10 to 80° C. The reaction time, i.e., the time taken for addition and maturing is preferably 0.5 to 20 hours, more preferably 1 to 10 hours, and even more preferably 1, to 5 hours.

The amount of water is not particularly limited. Since a smaller amount of water leads to a higher productivity and a less transportation cost, water is preferably used in an amount of 3 to 20,000 moles, more preferably 3 to 100 moles, and even more preferably 3 to 50 moles per mole of silicon atom. If the concentration is high, the aqueous solution may be diluted prior to use.

During the reaction, a volatile alcohol is formed as byproduct. The volatile alcohol may be removed while or after the compound of formula (2) is added to water. Although the conditions for removal are not particularly limited, the preferred conditions include atmospheric or subatmospheric pressure and a temperature of 0 to 100°C, preferably 10 to 80°C. The content of volatile alcohol is less than 10% by weight of the aqueous solution. The content of volatile alcohol is less than or equal to 5% by weight and more preferably less than or equal to 2% by weight because a lower alcohol content indicates less release of volatilizing alcohol on use.

On use, the aqueous solution may be diluted with a solvent. Examples of the diluent include, but are not limited to, protic polar solvents, typically water, hydrocarbon solvents such as pentane, hexane, cyclohexane, heptane, isooctane, benzene, toluene, and xylene, ether solvents such as diethyl ether, tetrahydrofuran, and dioxane, ester solvents such as ethyl acetate and butyl acetate, aprotic polar solvents such as acetonitrile and N,N-dimethylformamide, and halogenated hydrocarbon solvents such as dichloromethane and chloroform. These solvents may be used alone or in admixture. An acid or base may also be used as a pH modifier.

As long as the objects of the invention are not compromised, one or more additives may be added to the aqueous solution, for example, pigments, dyes, defoamers, lubricants, preservatives, pH modifiers, film formers, antistatic agents, antiseptic agents, surfactants, polymerization initiators, and polymerization accelerators.

The aqueous solution of piperazinyl-containing silanol compound is useful as silane coupling agents, surface treating agents, textile treating agents, adhesives, paint additives, polymer modifiers or the like.

### EXAMPLE

Synthesis Examples, Examples, and Application Examples are given below by way of illustration and not by way of limitation.

### Synthesis Example 1

Synthesis of 2,2-dimethoxy-8-(4-methylpiperazinyl)methyl-1,6-dioxa-2-silacyclooctane

A flask equipped with a stirrer, reflux condenser, dropping funnel and thermometer was charged with 30 g (0.30 mol) of methylpiperazine. With stirring at 85-95°C, 71 g (0.30 mol) of γ-glycidoxypropyltrimethoxysilane was added dropwise over 4 hours. Stirring was continued for 2 hours at the temperature, obtaining a clear reaction solution. On distillation of the reaction solution, 39 g of a clear fraction at a boiling point of 140-142°C/0.4 kPa was collected.

The fraction was analyzed by mass spectrometry, ¹H-NMR (in heavy chloroform), and IR spectroscopy. The data of mass spectrometry are given below.

m/z 304, 273, 34, 139, 113

F1GS. 1 and 2 are ¹H-NMR and IR spectra of the compound, respectively. From these data, the compound was identified to be 2,2-dimethoxy-8-,(4-methylpiperazinyl)methyl-1,6-dioxa-2-silacyclooctane.

### Example 1.

Aqueous solution of 1-trihydroxysilyl-6-hydroxy-7-(4-methylpiperazinyl)-4-oxaheptane

A 100-ml four-necked flask equipped with a Dimroth condenser, Dean Stark trap, stirrer, and thermometer was thoroughly purged with nitrogen. The flask was charged with 54 g of deionized water, to which 36 g of 2,2-dimethoxy-8-(4-methylpiperazinyl)methyl-1,6-dioxa-2-silacyclooctane was slowly added dropwise. The reaction solution was matured at atmospheric pressure and 60°C for 1 hour, after which the flask was heated to slowly remove methanol formed. Heating was interrupted when the head temperature reached 100°C, and the flask was allowed to cool. The resulting aqueous solution was adjusted in concentration by adding deionized water to a nonvolatile content of 32-33 wt%. By filtration, a clear aqueous solution was obtained. Analysis by gas chromatography (internal standard method) showed a residual methanol content of 0.3 wt%. The aqueous solution was evaporated to dryness by heating in a hot air oven at 105°C for 3 hours. A nonvolatile content of 32 wt% was found. The aqueous solution was allowed to stand at room temperature for more than 1 month, during which period it remained clear without releasing further methanol and gel-like matter, proving shelf stability at room temperature. When the aqueous solution was diluted 25 times in volume with deionized water, methanol was no longer formed. The diluted aqueous solution also showed shelf stability at room temperature.

### Synthesis Example 2

Synthesis of 2,2-diethoxy-8-(4-methylpiperazinyl)methyl-1,6-dioxa-2-silacyclooctane

A reaction solution was obtained as in Synthesis Example 1 aside from using γ-glycidoxypropyltriethoxysilane instead of γ-glycidoxypropyltrimethoxysilane. On distillation of the reaction solution, 40 g of a clear fraction at a boiling point of 145-147°C/0.2 kPa was collected.

The fraction was analyzed by mass spectrometry, ¹H-NMR (in heavy chloroform), and IR spectroscopy. The data of mass spectrometry are given below.

m/z 332, 287, 262, 139, 113

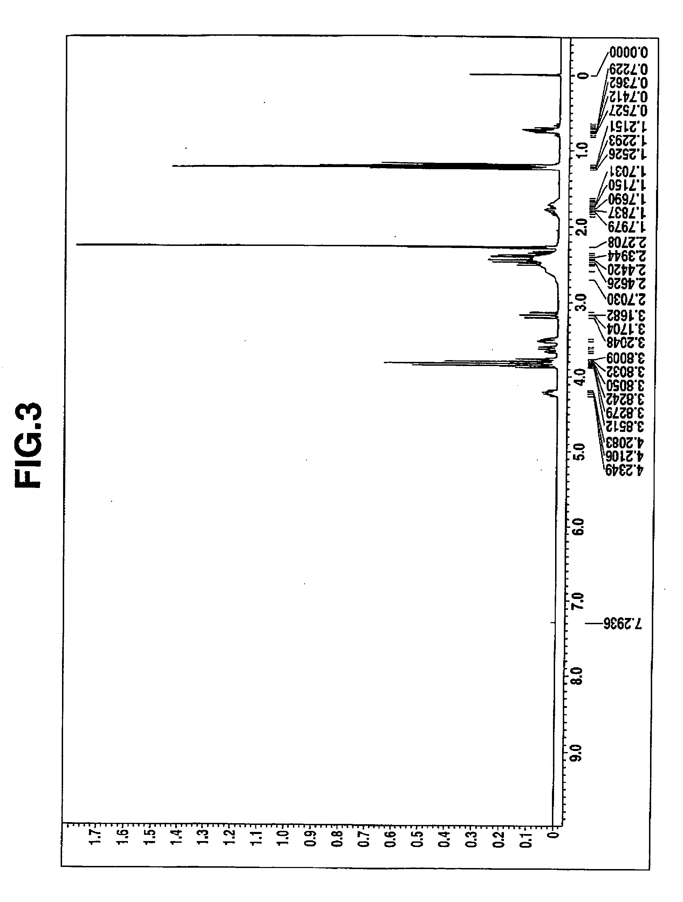

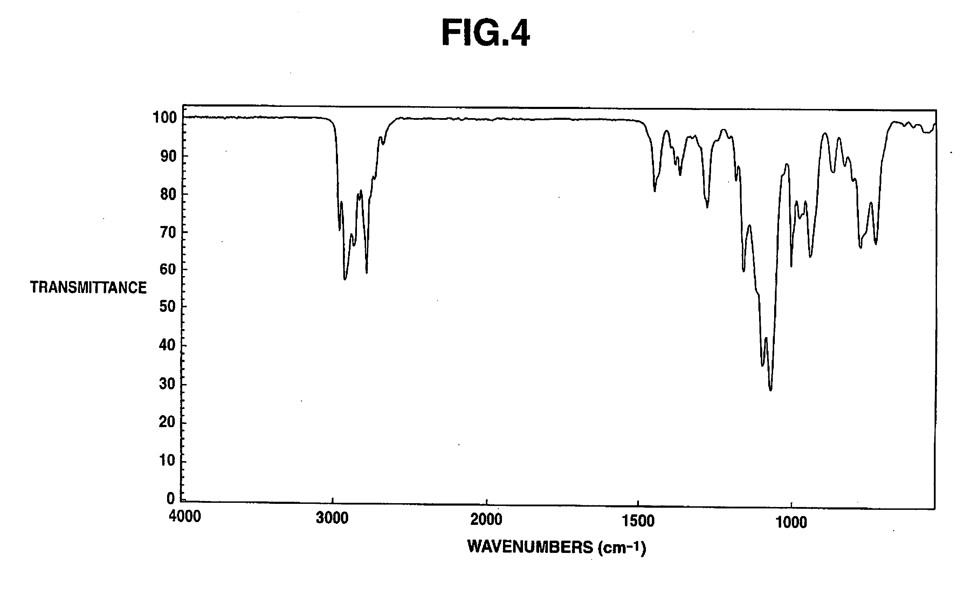

FIGS. 3 and 4 are ¹H-NMR and IR spectra of the compound, respectively. From these data, the compound was identified to be 2,2-diethoxy-8-(4-methylpiperazinyl)methyl-1,6-dioxa-2-silacyclooctane.

### Example 2

Aqueous solution of 1-trihydroxysilyl-6-hydroxy-7-(4-methylpiperazinyl)-4-oxaheptane

A 100-ml four-necked flask equipped with a Dimroth condenser, Dean Stark trap, stirrer, and thermometer was thoroughly purged with nitrogen. The flask was charged with 54 g of deionized water, to which 36 g of 2,2-diethoxy-8-(4-methylpiperazinyl)methyl-1,6-dioxa-2-silacyclooctane was slowly added dropwise. The reaction solution was matured at atmospheric pressure and 60°C for 1 hour, after which the flask was heated to slowly remove ethanol formed. Heating was interrupted when the head temperature reached 100°C, and the flask was allowed to cool. The resulting aqueous solution was adjusted in concentration by adding deionized water to a nonvolatile content of 32-33 wt%. By filtration, a clear aqueous solution was obtained. Analysis by gas chromatography (internal standard method) showed a residual ethanol content of 1.2 wt%. The aqueous solution was evaporated to dryness by heating in a hot air oven at 105°C for 3 hours. A nonvolatile content of 32 wt% was found. The aqueous solution was allowed to stand at room temperature for more than 1 month, during which period it remained clear without releasing further ethanol and gel-like matter, proving shelf stability at room temperature. When the aqueous solution was diluted 25 times in volume with deionized water, ethanol was no longer formed. The diluted aqueous solution also showed shelf stability at room temperature.

### Synthesis Example 3

Synthesis of 2-ethoxy-2-methyl-8-(4-methylpiperazinyl)-methyl-1,6-dioxa-2-silacyclooctane

A reaction solution was obtained as in Synthesis Example 1 aside from using γ-glycidoxypropylmethyldiethoxysilane instead of γ-glycidoxypropyltrimethoxysilane. On distillation of the reaction solution, 18 g of a clear fraction at a boiling point of 133-135°C/0.3 kPa was collected.

The fraction was analyzed by mass spectrometry, ¹H-NMR (in heavy chloroform), and IR spectroscopy. The data of mass spectrometry are given below.

m/z 302, 287, 257, 139, 113

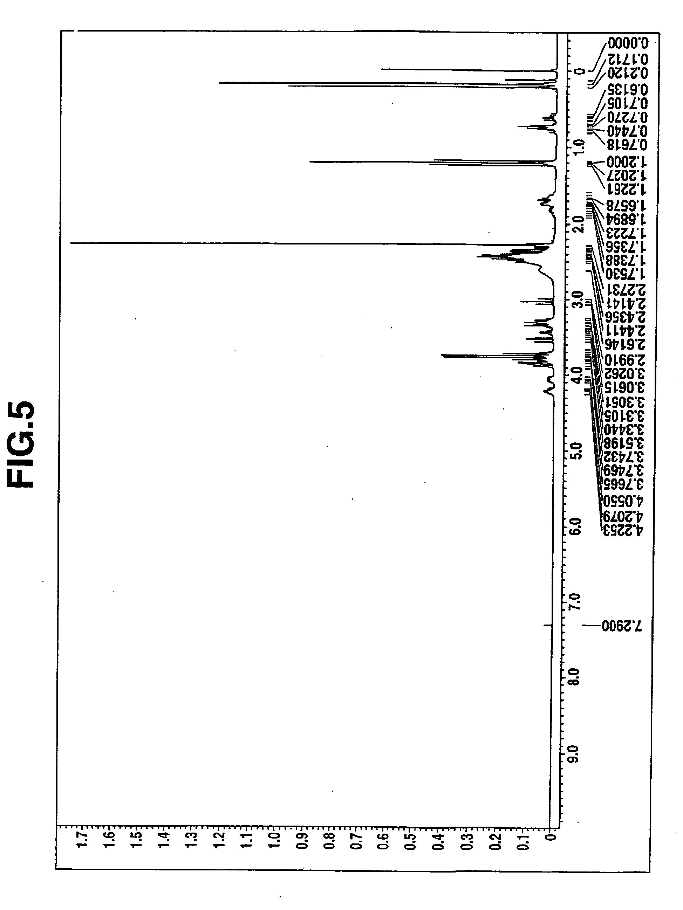

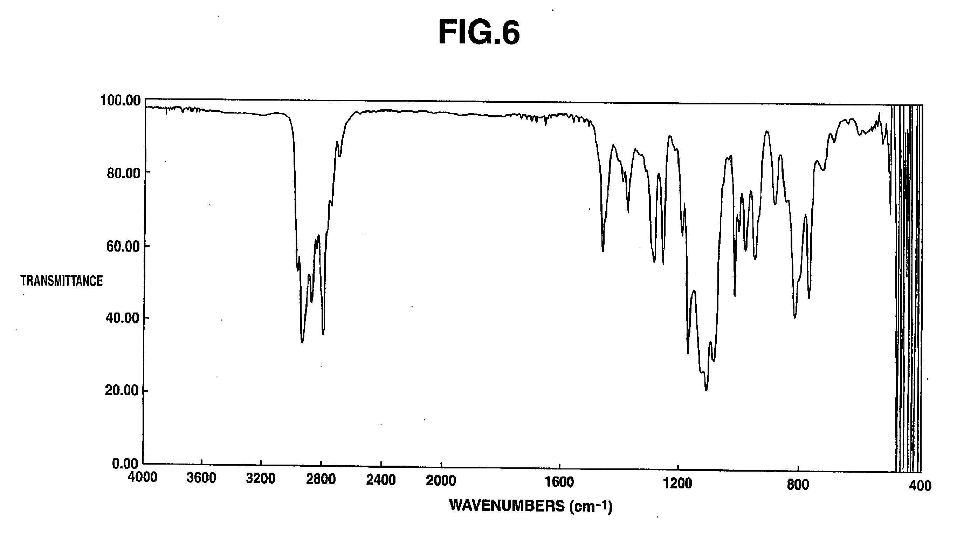

FIGS. 5 and 6 are ¹H-NMR and IR spectra of the compound, respectively. From these data, the compound was identified to be 2-ethoxy-2-methyl-8-(4-methylpiperazinyl)methyl-1,6-dioxa-2-silacyclooctane.

### Example 3

Aqueous solution of 1-methyldihydroxysilyl-6-hydroxy-7-(4-methylpiperazinyl)-4-oxaheptane

A 100-ml four-necked flask equipped with a Dimroth condenser, Dean Stark trap, stirrer, and thermometer was thoroughly purged with nitrogen. The flask was charged with 36 g of deionized water, to which 36 g of 2-ethoxy-2-methyl-8-(4-methylpiperazinyl)methyl-1,6-dioxa-2-silacyclooctane was slowly added dropwise. The reaction solution was matured at atmospheric pressure and 60°C for 1 hour, after which the flask was heated to slowly remove ethanol formed. Heating was interrupted when the head temperature reached 100°C, and the flask was allowed to cool. The resulting aqueous solution was adjusted in concentration by adding deionized water to a nonvolatile content of 32-33 wt%. By filtration, a clear aqueous solution was obtained. Analysis by gas chromatography (internal standard method) showed a residual ethanol content of 0.8 wt%. The aqueous solution was evaporated to dryness by heating in a hot air oven at 105°C for 3 hours. A nonvolatile content of 32 wt% was found. The aqueous solution was allowed to stand at room temperature for more than 1 month, during which period it remained clear without releasing further ethanol and gel-like matter, proving shelf stability at room temperature. When the aqueous solution was diluted 25 times in volume with deionized water, ethanol was no longer formed. The diluted aqueous solution also showed shelf stability at room temperature.

### Application Example

Measurement of adhesion

Once glass fibers were treated with the aqueous solution, a resin was fixed to the fibers in micro-droplet form. A maximum load needed to withdraw glass fibers therefrom was measured, from which an interfacial shear strength between glass and resin was determined. For measurement, an equipment for evaluating composite material interfacial properties, model HM410 (Tohei Sangyo Co., Ltd.) was used.

The interfacial shear strength is computed according to the following equation from the diameter of glass fibers, the length of resin droplets, and the maximum load of withdrawal.

Interfacial shear strength (N/m²) = (maximum withdrawal load)/(π x fiber diameter x droplet length)

The interfacial shear strength of glass fiber samples is reported as a relative value, provided that the interfacial shear strength of an untreated glass fiber sample is 100. A greater value indicates better adhesion.

The resin used in the test was prepared by mixing 100 g of a bisphenol A epoxy resin (Epikote 828 by Japan Epoxy Resin Co., Ltd.) with 11 g of triethylene tetramine as a curing agent. The curing conditions included 90 minutes at 80°C and 120 minutes at 100°C.

### Application Example 1

The aqueous solution of 1-trihydroxysilyl-6-hydroxy-7-(4-methylpiperazinyl)-4-oxaheptane (nonvolatile content 32 wt%) in Example 1 was diluted 25 times in volume with water. Glass fibers (diameter -23 µm) cut to a length of -300 mm were immersed in the diluted aqueous solution for 30 minutes. The fibers were taken out and dried in an oven at 70°C for 2 hours, obtaining treated glass fibers. Micro-droplets of an epoxy resin were fixed to the glass fibers by applying and curing the resin under the above-described conditions. A maximum load needed to withdraw glass fibers from droplets was measured, from which a relative interfacial shear strength of 208 was obtained.

### Comparative Application Example 1

An aqueous solution with a nonvolatile content of 32 wt% was prepared by the same procedure as in Example 1 aside from using 4-methylpiperazinylpropyltrimethoxysilane instead of 2,2-dimethoxy-8-(4-methylpiperazinyl)methyl-1,6-dioxa-2-silacyclooctane. The aqueous solution was diluted 25 times in volume with water. Glass fibers (diameter ∼23 µm) cut to a length of ∼300 mm were immersed in the diluted aqueous solution for 30 minutes. The fibers were taken out and dried in an oven at 70°C for 2 hours, obtaining treated glass fibers. Micro-droplets of an epoxy resin were fixed to the glass fibers as above. A maximum load needed to withdraw glass fibers from droplets was measured, from which a relative interfacial shear strength of 176 was obtained.

## Claims

1. An aqueous solution comprising a piperazinyl-containing silanol compound having the general formula (1): 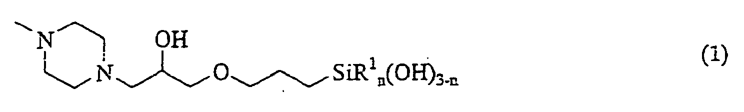 wherein R¹ is a substituted or unsubstituted monovalent hydrocarbon group of 1 to 10 carbon atoms and n is an integer of 0 to 2 and a dehydrated condensate thereof, the aqueous solution containing less than or equal to 5% by weight of a volatile alcohol.

2. The aqueous solution of claim 1 wherein 3 to 20,000 moles of water is present per mole of silicon atoms.

3. A method for preparing an aqueous solution of a piperazinyl-containing silanol compound as set forth in claim 1 or 2, comprising the steps of adding a compound having the general formula (2): 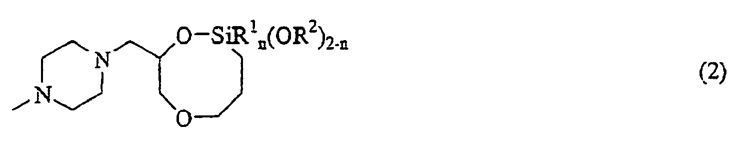 wherein R¹ and R¹ are each independently a substituted or unsubstituted monovalent hydrocarbon group of 1 to 10 carbon atoms and n is an integer of 0 to 2 to water, and removing a volatile alcohol formed as byproduct.

4. The method of claim 3, wherein the amount of water is 3 to 100 moles per mole of silicon atom.

5. The method of claim 3 or 4, wherein the reaction time is 0.5 to 20 hours at a temperature of 10 to 80°C.

6. The method of any one of claims 3 to 5, wherein the volatile alcohol is removed at a temperature of 10 to 80°C while or after the compound of formula (2) is added to water.

## Patentansprüche

1. Wässrige Lösung, umfassend eine Piperazinyl-haltige Silanolverbindung der allgemeinen Formel (1): 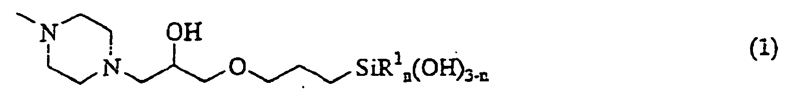 worin R¹ eine substituierte oder unsubstituierte einwertige Kohlenwasserstoffgruppe mit 1 bis 10 Kohlenstoffatomen ist, und n eine ganze Zahl von 0 bis 2 ist, und ein dehydratisiertes Kondensat davon, wobei die wässrige Lösung weniger als oder gleich 5 Gew.-% eines flüchtigen Alkohols enthält.

2. Wässrige Lösung nach Anspruch 1, wobei 3 bis 20.000 Mole Wasser pro Mol Siliciumatome vorliegen.

3. Verfahren zur Herstellung einer wässrigen Lösung einer Piperazinyl-haltigen Silanolverbindung gemäß Anspruch 1 oder 2, umfassend die Schritte des Zugebens einer Verbindung der allgemeinen Formel (2) 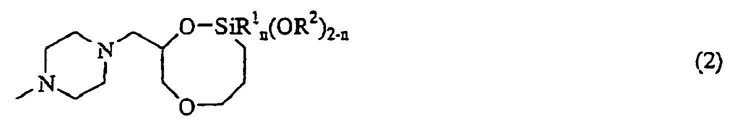 worin R¹ und R² jeweils unabhängig eine substituierte oder unsubstituierte, einwertige Kohlenwasserstoffgruppe mit 1 bis 10 Kohlenstoffatomen sind und n eine ganze Zahl von 0 bis 2 ist, zu Wasser, und des Entfernens eines als Nebenprodukt gebildeten, flüchtigen Alkohols.

4. Verfahren nach Anspruch 3, wobei die Menge an Wasser 3 bis 100 Mole pro Mol Siliciumatom beträgt.

5. Verfahren nach Anspruch 3 oder 4, wobei die Umsetzungszeit 0,5 bis 20 Stunden bei einer Temperatur von 10 bis 80 °C beträgt.

6. Verfahren nach mindestens einem der Ansprüche 3 bis 5, wobei der flüchtige Alkohol bei einer Temperatur von 10 bis 80 °C während oder nachdem die Verbindung der Formel (2) dem Wasser zugegeben wird, entfernt wird.

## Revendications

1. Solution aqueuse comprenant un composé de silanol contenant un groupe pipérazinyle et ayant la formule générale (1) : 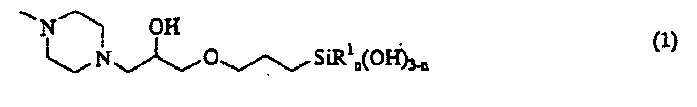 dans laquelle R¹ est un groupe hydrocarboné monovalent substitué ou non substitué de 1 à 10 atomes de carbone et n est un nombre entier de 0 à 2 et un condensé déshydraté de celui-ci, la solution aqueuse contenant 5 % en poids ou moins d'un alcool volatil.

2. Solution aqueuse selon la revendication 1, dans laquelle de 3 à 20 000 moles d'eau sont présentes par mole d'atomes de silicium.

3. Procédé de préparation d'une solution aqueuse d'un composé de silanol contenant un groupe pipérazinyle selon la revendication 1 ou 2, comprenant les étapes consistant à ajouter un composé ayant la formule générale (2) : 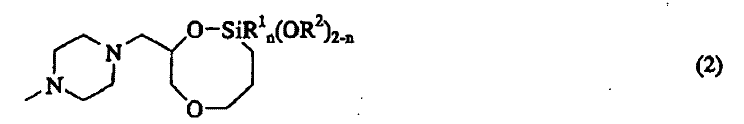 dans laquelle R¹ et R² sont chacun indépendamment un groupe hydrocarboné monovalent substitué ou non substitué de 1 à 10 atomes de carbone et n est un nombre entier de 0 à 2, à de l'eau et éliminer un alcool volatil formé comme sous-produit.

4. Procédé selon la revendication 3, dans lequel la quantité d'eau est de 3 à 100 moles par mole d'atomes de silicium.

5. Procédé selon la revendication 3 ou 4, dans lequel le temps réactionnel est de 0,5 à 20 heures à une température de 10 à 80°C.

6. Procédé selon l'une quelconque des revendications 3 à 5, dans lequel l'alcool volatil est éliminé à une température de 10 à 80°C pendant ou après l'ajout du composé de formule (2) à l'eau.
